Europäisches Patentamt

(19) European Patent Office  (11) Publication number: **0 217 800**
Office européen des brevets  **B1**

(12)  **EUROPEAN PATENT SPECIFICATION**

(45) Date of publication of the patent specification: (51) Int. Cl.⁴: **A 61 C 13/26**
12.04.89

(21) Application number: **85903357.3**

(22) Date of filing: **20.06.85**

(86) International application number:
**PCT/IT 85/00011**

(87) International publication number:
**WO 86/00218 (16.01.86 Gazette 86/2)**

(54) **DENTAL CROWNS AND BRIDGES MADE UP OF A TITANIUM ALLOY CAPABLE OF BEING WELDED IN THE MOUTH.**

| | |
|---|---|
| (30) Priority: **20.06.84 IT 4842584**<br>**13.07.84 IT 4856484** | (73) Proprietor: **TITANWELD N.V., P.O. Box 83, Bonaire (AN)** |
| (43) Date of publication of application:<br>**15.04.87 Bulletin 87/16** | (72) Inventor: **HRUSKA, Arturo, Via G. Carducci 10,<br>I-00187 Roma (IT)** |
| (45) Publication of the grant of the patent:<br>**12.04.89 Bulletin 89/15** | (74) Representative: **de Simone, Domenico et al, Ing.<br>Barzanò & Zanardo Roma S.p.A. Via Piemonte 26,<br>I-00187 Roma (IT)** |
| (84) Designated Contracting States:<br>**AT BE FR GB LU NL SE** | |
| (56) References cited:<br>**CH-A- 352 728<br>DE-A- 3 150 039<br>FR-A- 1 306 268<br>US-A- 3 430 344<br>US-A- 3 727 299<br>US-A- 4 310 312** | |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

ACTORUM AG

## Description

The present invention relates to dental crowns and bridges which are made up of a titanium alloy and can be welded in the mouth. More particularly, the present invention relates to dental crowns and bridges of said kind, which are made up of high titanium concentration alloys, wherein the presence of one or two tabs, respectively in correspondence to only one of the linking sides or to both the linking sides with the adjacent teeth, as well as the presence of projections on the inside lateral surfaces of the same allow an easy and precise welding operation within the mouth.

As well, the present invention relates to laminate jointing means for welding cast or pressed dental crowns and bridges in the mouth, made up of a high titanium concentration alloys or of other alloys which are capable of being welded in the mouth, said means being provided at one end with a shaped element which is designed for being rigidly coupled to a crown element made up of gold, titanium or another dentally suitable metal and bearing on their inside lateral surfaces possibly with one or more projections in order to allow an easy welding operation in the mouth with said lamina of the crown element which is associated with the adjacent tooth.

It is well known that dental crowns and bridges are to satisfy a number of mechanical features as regards the capability of taking the stress induced by the masticatory load, as regards hardness etc., and at the same time they have to possess the necessary requirements of biocompatibility. That is the reason why gold, in the form of different alloys has been chosen and constantly employed up to now in any dental application.

It is to be remarked that independently of its very high cost (about 25,000 Italian lire/g), gold does not allow any electric welding operation in the mouth. Moreover, the production of gold crown and bridges asks for the necessary warranties of strength, the observance of thicknesses that are often of considerable size and limit the surface of the aesthetic part of the tooth (the so-called white surface).

In FR-A-1 306 268 a dental cap, crown or bridge element is described made up of biocompatible alloys having the shape imitating the tooth and provided with a tab for attaching adjacent elements by welding or soldering. There is no mention of attaching adjacent elements within the mouth.

Thus it is evident the need for a material to be used in such dental field that is capable of allowing an electric welding operation within the mouth and at the same time of giving the desired mechanical and biocompatibility characteristics.

To that end, according to this invention, titanium is suggested, which, in the form of aluminium and vanadium alloys at high titanium concentrations is very suitable for the resistance welding techniques with no need for protection with inert gases and satisfies the biocompatibility requirements.

The present invention also discloses the structure of said crowns in order to obtain an easy weldability within the mouth through the introduction of tabs which bear a projection on their surfaces which are designed for the contact.

It is another object of the present invention to obtain the possibility of carrying out welding operations in the mouth also with gold crowns or with crowns made up of another noble metal or not noble dentally suitable metal employing laminate jointing elements realized with a high titanium concentration alloy or with another alloy that is capable of being welded in the mouth, such elements being designed for their application or coupling to said crowns and successively the welding between themselves.

The present invention satisfies such requirements supplying the structural solution embodied by a preformed jointing lamina realized with a high titanium concentration alloy or a similar one, said lamina showing at one end a shaped element to be rigidly coupled with a crown element made up of gold or another dentally suitable noble or not noble metal, either by screwing, by the use of restrained or fixed joints, by overlapping, or by any other form of mechanical fixing, and possibly provided with one or more projections on its inside lateral surface.

The dental crowns or bridges according to the present invention allow to obtain advantageously an optimal positioning of the various elements because the welding operation is carried out when the dental cement has been definitively put in its place, so that any drawbacks are eliminated which occur at the present time as regards parallelism problems, because also very divergent elements receive the dental cement separately and then they are separately welded in the mouth.

Moreover, also in very extended restoration operations (the dental arch) the removal of one or more elements is easier; indeed, it is sufficient to destroy an aesthetic element, to cut the structure, to treat and modify the tooth, to reweld with the welding machine and to repair only one aesthetic element.

It is to be remarked that the possibility of working in the way disclosed above is very important because also the best dentists can incur the break of the aesthetic part, of the structural part (the breaking of the welded part) and the partial loss of the dental cement, so that drawbacks may occur of some bearing as regards time and costs.

More particularly, it is to be remarked that the choice of said titanium alloys gives the maximum advantage just on the economic plane, because the cost of such alloys is fully negligible (about 90 Italian lire/g), and the possibility of welding operations in the mouth, which is allowed by their employment, diminishes the interventions of the dentist and after all the production costs.

In addition, besides making the various dental operations easier as regards the drawbacks of a more or less long bridge such as the gingival retraction, the periapical lesions, etc., the present invention is advantageously employed also in the inplantation techniques, this being the first time that an inplantation can be definitively immobilized during the surgical intervention by fixing the same to the mesostructure which has already received the dental cement.

Thus it is a specific object of the present invention that of supplying dental caps crowns and bridge elements which can be welded within the mouth and are based on a high titanium concentration alloy, said dental elements being as defined in Claim 1.

It is another object of the present invention that of supplying preformed jointing means for welding pressed or cast dental crowns or bridge elements in the mouth, said means being as defined in Claim 2 and which is possibly provided with one or more projections on its inside lateral surface in order to allow an easy welding operation in the mouth with the jointing lamina of the crown element associated with the adjacent tooth.

Said high titanium concentration alloys are alloys containing 80-99.9% titanium, in particular the alloys of the Grade 1- Grade 5 series (ASTM-B265/348/337).

Moreover, the jointing lamina according to this invention may be of a thickness of 0.2-4 mm, and in the most preferred case of 0.8 mm.

In the preferred embodiments according to the present invention, the shaped element of the jointing lamina is made up of a threaded body, which is advisable in the case of riding elements (dental bridges) and in the Richmond crowns, or said element shows a dovetail shape or a drop shape, or the shape of a hollow portion of a cylinder, etc., such shape being suitable for giving an optimal mechanical fasting action with the opportunely prearranged crown element.

Moreover, it is to be remarked that said projections can also be present according to different embodiments so that they are more than one in number with a further improvement of the weldability of said tabs between themselves.

It is still further to be remarked that the mechanical characteristics of said titanium alloys largely satisfy the dental requirements, as can be observed from the following table in which the values are reported of the same characteristics of the gold alloys commonly employed in dentistry.

|  |  | titanium alloy Grade 1 | gold A | titanium alloy Grade 5 | gold B |
|---|---|---|---|---|---|
| A) | hardness HB% | 140 | 65 | 310 | 188 |
| B) | ultimate tensile stress kg/mm$^2$ | 30-45 | 61 | 90-100 | 145 |
| C) | elastic limit 02% N/mm$^2$ | 200 | 200 | 850-890 | 1030 |
| D) | elongation, % | 25-30 | 22 | 8-10 | 4 |

It is also to be considered that such characteristics are obtained with titanium alloy thicknesses much lower than those which are to be used for gold, so that the advantage is obtained of less filing work when treating the tooth and of a higher amount of white surface.

The present invention will be disclosed in the following with particular reference to the drawings in which some preferred embodiments are shown of the present invention for illustration purposes onyl, in which drawings:

figure 1 is a plan view of some crown elements according to this invention;

figure 2 is a plan view of the elements of figure 1 welded between themselves;

figure 3 is a side view of some crown elements according to the present invention;

figure 4 is a side view of the elements of figure 3 in the welded state;

figure 5 shows the side view of a first series of jointing laminae according to the present invention;

figure 6 shows the side view of a second series of laminae according to the present invention;

figure 7 shows the side view of a third series of laminae according to the present invention;

figure 8 shows the side view of the elements of a series of crowns welded to the laminate elements shown in figures 1, 2 and 3; and

figure 9 shows the side view of a dental bridge in which said laminae according to the present invention are welded to each other according to different combinations.

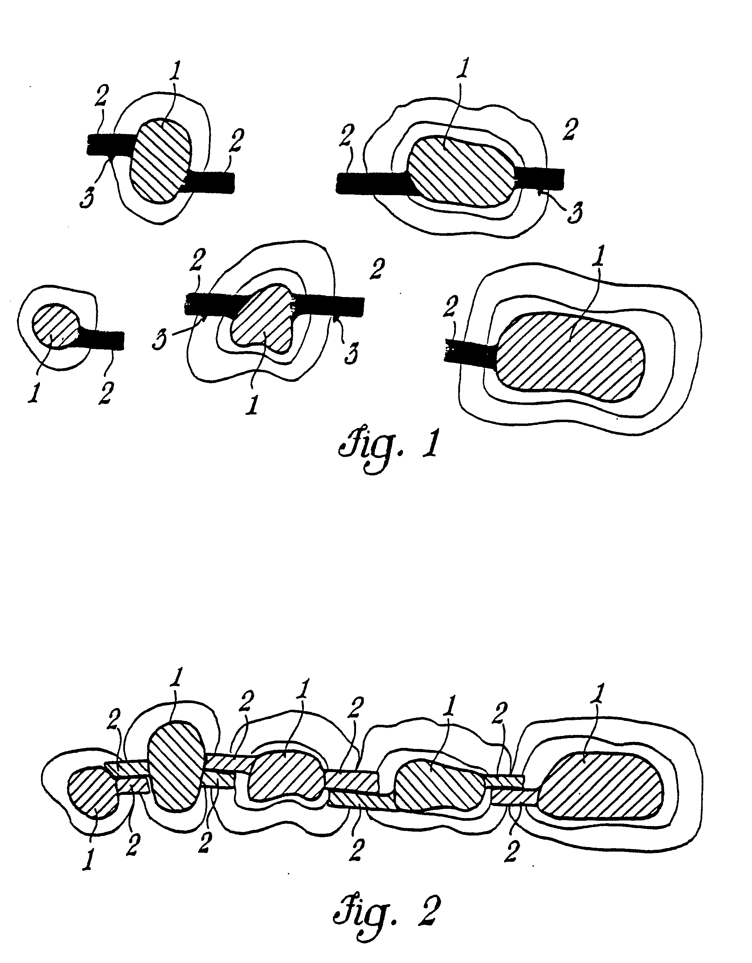

It is seen in figure 1 that the crown element is made up of a cap or crown 1 provided on one of the sides which are designed to be bonded with the tooth or the adjacent teeth, or on both said sides, of one tab or of two tabs 2. Some projections 3 can also be observed on the inside lateral surfaces of said tabs 2. In order to simplify the illustration of the elements of the crown 1 mounted on the teeth, such elements have been drawn staggered (figure 1).

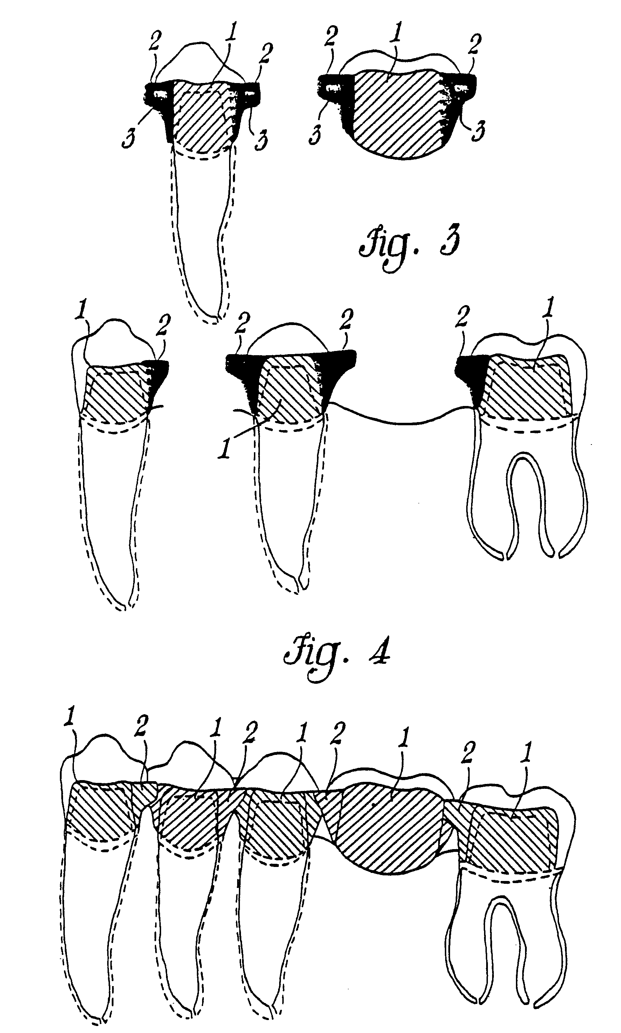

In figure 2 the series can be observed of crowns 1 direct welded along the tabs 2.

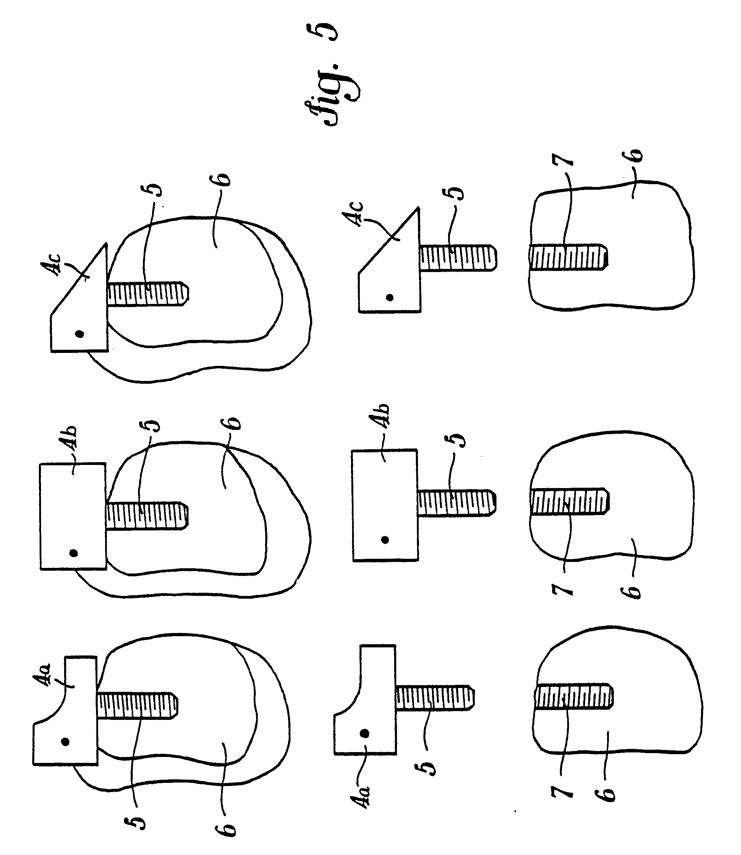

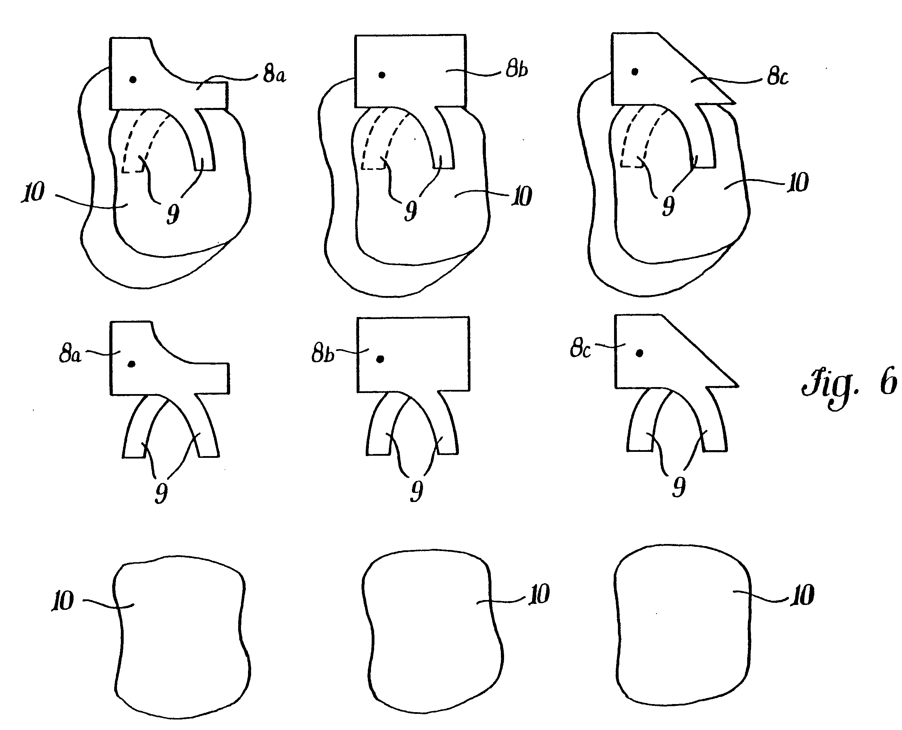

In figures 3 and 4 the arrangements can be observed of the crowns 1 with tabs 2 and projections 3 respectively before and after the welding operation.

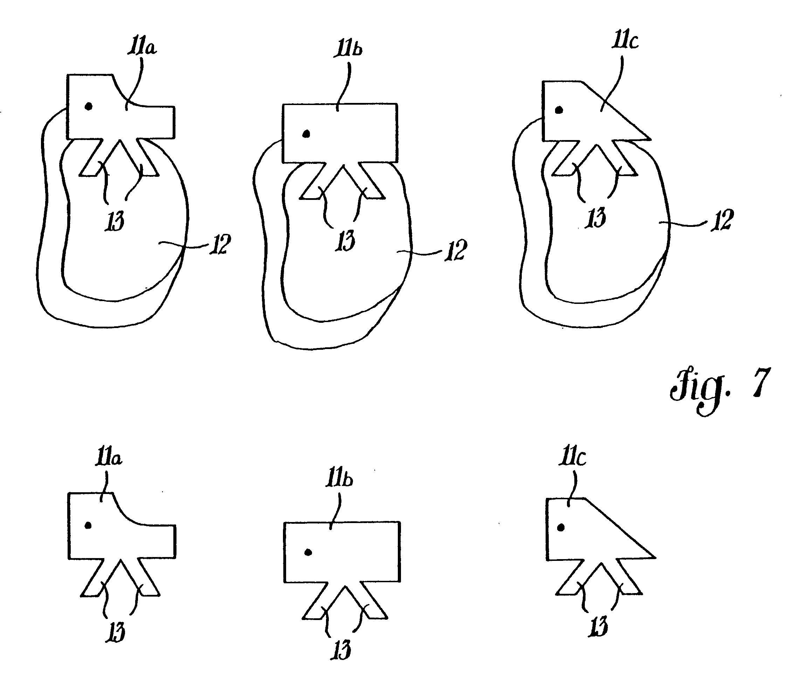

With particular reference now to figure 5, a series can be observed of jointing laminae 4a, 4b and 4c, before and after their coupling with the corresponding crowns 6. Said laminae are provided at one of their ends with threaded bodies 5 which are designed for being coupled into the female threads 7 machined into the crown bodies 6. According to this arrangement, the following procedure is carried out: the female thread 7 is obtained within the crown 6 by either overfusion of a preformed female part or threading, for instance by turning the element which has already cast with the suitable internal diameter.

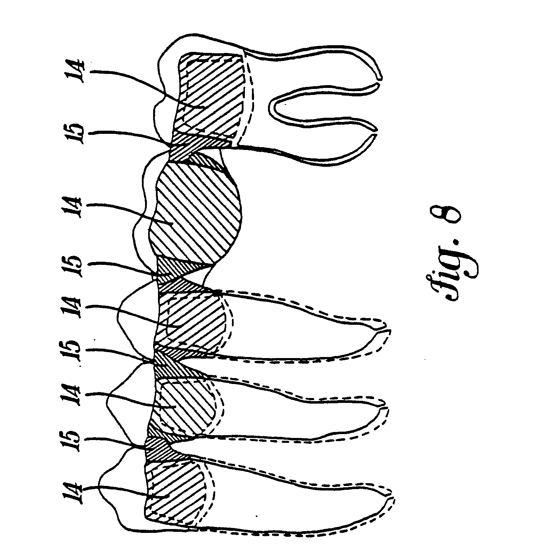

In figure 6 a different coupling can be observed, obtained by overfusion between the laminae 8a, 8b and 8c, provided with a shaped element which has the shape of a hollow portion of a cylinder 9 and the crowns 10.

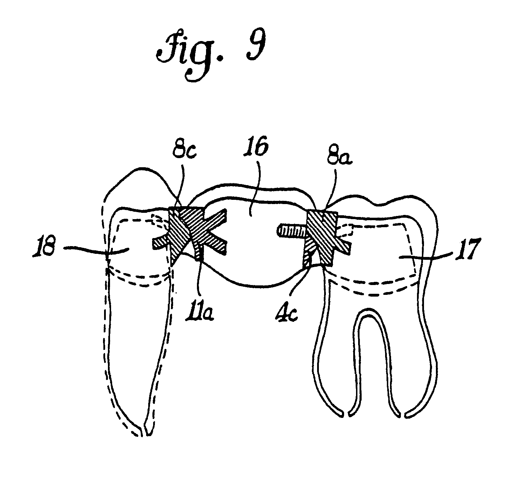

In figure 7, the coupling between the laminae 11a, 11b and 11c, with the crowns 12 is obtained through the dovetail-shaped element 13, in that case also by overfusion.

In figure 8 a series of crowns 14 is observed which are coupled through the laminae 15 of the present invention, that are welded between themselves.

In figure 9 the lamina 4c and the lamina 8a can be observed which are welded to each other and connect the crown elements 16 and 17, and the lamina 8c and the lamina 11a can also be observed which are welded each other and connect the crown elements 16 and 18.

## Claims

1. A dental cap, crown or bridge element (1) made of alloys containing 80-99,9% of titanium, which may be welded to similar adjoining dental caps, crowns or bridge elements (1) in the mouth, comprising a cast or pressed cap, crown or bridge element imitating the shape of a tooth, such cap, crown or bridge element being provided with one or two tabs (2) to be located adjacent to neighbouring caps, crowns or bridge elements, one or more projections (3) being provided on lateral surfaces of said tabs which are designed for being welded within the mouth to tabs of neighbouring caps, crowns or bridge elements.

2. Jointing means (4a, b, c; 8a, b, c; 11a b, c) for attaching to cast or pressed dental crowns or bridge elements (6, 10, 12) produced in gold or other dentally suitable material to permit connection between said crowns or bridge elements by welding in the mouth, said jointing means comprising a lamina of an alloy containing 80-99,9% of titanium or of another alloy capable of being welded in the mouth and being provided with attachment means which are shaped so as to permit rigid coupling with the crown or bridge element.

3. Jointing means (4a, b, c; 8a, b, c; 11a, b, c) according to claim 2 wherein said lamina is provided with one or more projections on its inside lateral surface in order to allow an easy welding operation in the mouth with the jointing lamina of the crown element associated with an adjacent tooth.

4. Jointing means (4a, b, c; 8a, b, c; 11a, b, c) according to claim 2 wherein the thickness of said jointing lamina is from 0.2 to 4 mm.

5. Jointing means (4a, b, c; 8a, b, c; 11a, b, c) according to claim 2 characterized in that said shaped element is made up of a threaded cylindrical body (5).

6. Jointing means (4b c, d,; 8a, b, c; 11a, b, c) according to claim 2 characterized in that said shaped element is made up of a curved leg (9).

7. Jointing means (4a, b, c; 8a, b, c; 11a, b, c) according to claim 2 characterized in that said shaped element is made up of a body in the shape of a dovetail (13)

## Patentansprüche

1. Ein kapsel-, krone- oder brückenartiges Zahnelement (1) aus einer 80 bis 99,9% Titan haltigen Legierung, welches an ähnliche kapsel-, krone- oder brückenartige Zahnelemente angeschweisst werden kann, wobei das gepresste oder gegossene Zahnelement die Form eines Zahnes aufweist und mit einer oder zwei Federn (2) versehen ist, welche an das Nebenzahnelement anliegend angeordnet werden, wobei ein oder mehrere Vorsprünge (3) an der Seitenflächen der genannten Federn vorgesehen sind, die im Mund an die Federn der kapsel-, krone- oder brückenartige Nebenzahnelemente angeschweisst werden.

2. Kupplungsmittel (4a, b, c; 8a, b, c; 11a, b, c) zum Ankuppeln an die gegossene oder gepresste kapsel-, krone- oder brückenartige Zahnelemente (6, 10, 12) aus Gold oder aus einem anderen angebrachten Dentalstoff, zur Ermöglichung der Verbindung zwischen den genannten kapsel-, krone- oder brückenartigen Zahnelementen, wobei diese Kupplungsmittel eine Folie aus einer 80-99,9% Titan haltigen Legierung oder aus einer anderen, im Mund schweissbaren Legierung enthalten und mit Verbindungsmitteln versehen sind, die so geformt sind, dass sie eine feste Verbindung mit dem Krone- oder Brückenelement gestatten.

3. Kupplungsmittel (4a, b, c; 8a, b, c; 11a b, c) nach Anspruch 2, dadurch gekennzeichnet, dass die genannte Folie mit einem oder mehreren Vorsprüngen an ihrer inneren Seitenfläche versehen ist, um eine leichte Verschweissung im Mund mit der Kupplungsfolie des mit dem Nebenzahn verbundenen Kroneelement zu gestatten.

4. Kupplungsmittel (4a, b, c; 8a, b, c; 11a, b, c) nach Anspruch 2, dadurch gekennzeichnet dass die Kupplungsfolie 0,2 bis 4,00 mm dick ist.

5. Kupplungsmittel (4a, b, c; 8a, b, c; 11a, b, c) nach Anspruch 2, dadurch gekennzeichnet, dass das Formelement aus einem geschnittenen Zylinderkörper (5) besteht.

6. Kupplungsmittel (4a, B, C; 8a, b, c; 11a, b, c) nach Anspruch 2, dadurch gekennzeichnet, dass das genannte Formelement aus einem gekrümmten Stäbchen (9) besteht.

7. Kupplungsmittel (4a, b, c; 8a, b, c; 11a, b, c) nach Anspruch 2, dadurch gekennzeichnet, dass das genannte Formelement aus einem schwalbenschwanzförmigen Körper (13) besteht.

## Revendications

1. Un élément dentaire (1) en forme de capsule, couronne ou pont, fait en alliages contenant 80-99,9% de titane, qui peut être soudé aux éléments dentaires semblables adjacents en forme de capsule, couronne ou pont comprenant un élément coulé ou pressé en forme de capsule, couronne ou pont imitante la forme d'un dent, tel élément en forme de capsule, couronne ou pont étant muni d'une ou deux languettes (2) pour être disposées adjacent aux éléments voisins en forme de capsule, couronne ou pont, une ou plusieurs saillies (3) étant prévues sur les surfaces latérales des dites languettes, qui sont destinées à être soudées dans la bouche avec les languettes des éléments voisins en forme de capsule, couronne ou pont.

2. Moyens de jonction (4a, b, c; 8a, b, c; 11a, b c) destinés à être fixés aux éléments en forme de capsule, couronne ou pont, produits d'or ou d'un autre matériel dentaire apte à être joint avec lesdits éléments en forme de couronne ou pont au moyen de soudure dans la bouche, lesdits moyens de jonction comprenant une feuille d'un alliage contenante 80-99,9% de titane ou d'un autre alliage apte à être soudé dans la bouche et étant muni de moyens de fixage, qui sont formés de façon à permettre la jonction rigide avec l'élément en forme de couronne ou pont.

3. Moyens de jonction (4a, b, c; 8a, b, c; 11a, b, c) selon la revendication 2, dans lesquels ladite feuille est munie d'une ou de plusieurs saillies sur leur surface latérale de façon à permettre une opération de soudure facile dans la bouche avec la feuille de jonction adjacente de l'élément à couronne associé avec le dent adjacent.

4. Moyens de jonction (4a, b, c; 8a, b, c; 11a, b, c) selon la revendication 2, dans lesquels l'épaisseur de ladite feuille est de 0,2 à 4 mm.

5. Moyens de jonction (4a, b, c; 8a, b, c; 11a, b, c) selon la revendication 2, caractérisés en ce que ledit élément formé est fait d'un corps cylindrique fileté (5).

6. Moyens de jonction (4a, b, c; 8a, b, c; 11a, b, c) selon la revendication 2, caractérisés en ce que ledit élément formé est fait d'une barrette incurvée (9).

7. Moyens de jonction (4a, b, c; 8a, b, c; 11a, b, c) selon la revendication 2, caractérisés en ce que ledit élément formé est fait d'un corps à queue d'aronde (13).

Fig. 1

Fig. 2

*Fig. 3*

*Fig. 4*

9

fig. 5

EP 0 217 800 B1

*fig. 6*

EP 0 217 800 B1

11c 12 13 11c 13

11b 12 13 11b 13

11a 12 13 11a 13

fig. 7

Fig. 8

_fig. 9_